# EUROPEAN PATENT SPECIFICATION

(11) **EP 3 428 140 B1**
(45) Date of publication and mention of the grant of the patent: **20.03.2024**
(21) Application number: 15906186.0
(22) Date of filing: 14.10.2015
(51) Int. Cl.: C05F 5/00, C05F 11/10, C05G 3/00, C12F 3/06, A01N 63/00

(54) **PRODUCTION OF IMPROVED FORTIFIER FROM BEER YEAST WATER**
HERSTELLUNG VON VERBESSERTEM VERSTÄRKUNGSMITTEL AUS BRAUHEFEWASSER
OBTENTION DE FORTIFIANT AMÉLIORÉ À PARTIR D'EAU DE LEVURE DE BIÈRE

(43) Date of publication of application: 16.01.2019
(73) Proprietor: Adobs I Innovació Fitovegetal Hortus Natura S.L., 08180 Moiá (Barcelona) (ES)
(72) Inventor: LARROSA PADRÓ, Marta, 08208 Sabadell (Barcelona) (ES)
(74) Representative: Urizar Anasgasti, José Antonio
(86) International application number: PCT/ES2015/070746
(87) International publication number: WO 2017/064337

(56) References cited:
- WO-A1-01/07380
- ES-A1- 2 329 750
- ES-A1- 2 397 178
- JP-A- 2007 326 740
- DATABASE WPI Week 199512 Thomson Scientific, London, GB; AN 1995-085310 XP002789854, & JP H07 10718 A (MITSUI TOATSU CHEM INC) 13 January 1995 (1995-01-13)
- DATABASE WPI Week 200462 Thomson Scientific, London, GB; AN 2004-637574 XP002789855, & JP 2004 242505 A (TOYOBO SOGO KENKYUSHO KK) 2 September 2004 (2004-09-02)
- DATABASE WPI Week 200977 Thomson Scientific, London, GB; AN 2009-Q76160 XP002789856, & CN 101 554 133 A (YUNNAN TOBACCO AGRIC SCI RES INST) 14 October 2009 (2009-10-14)

## Description

### TECHNICAL FIELD

The present invention relates to the area of fertilizers and fortifiers intended for different crops and plants. More accurately the invention relates to a method for obtaining fertilizer fortifiers from water of brewer yeast of very low protein concentration.

In particular, it relates also to the environmental protection area through reducing the dumping of harmful products to the environment, such as said brewer yeast water, which may trigger uncontrolled fermentations in the environment.

### PRIOR ART

Some references are known to some extent related to the topic of interest. Document CN101209944 prepares through fermentation a fortifier and fertilizer in which among others, a waste sludge from the beer production, as well as waste of plant origin and other organic waste are used. It represents no interest except for the use of brewer yeast in the fermentation of plant wastes.

It is known from document CN1217307 the use of waste water from the beer production to prepare a plant foliage fertilizer. Water is acidified at a low pH 1,5 - 2,5, adding KNO₃, NH₄NO₃, KH₂PO₄, MgSO₄, H₃BO₃, Na₂-EDTA, ZnSO₄, CuSO₄, MnSO₄, KI, CoCl₂ which may be prepared before or after the fermentation of the beer. Rather it is used as a simple mixture to which known K, N, P and trace elements are added, which in use, the dumped amount of this contaminant waste is reduced and the use thereof as a broad application spectrum fertilizer achieved.

US6.042.629 patent discloses a method using waste brewery cleaning solutions. Firstly, it uses potassium alkaline solutions, and subsequently nitrogen and/or phosphorus acid solutions. These solutions lead to a fertilizer solution containing potassium salts, nitrogen, organic materials, and materials dragged from fermentation. Document P2329750 discloses a method to obtain a product fertilizer from the waste of beer production, characterized in that it comprises the steps of:
(a) subjecting the waste to alkaline treatment at pH of 10.5 - 13 followed by filtration to obtain a protein solution;
(b) subjecting the protein solution obtained in step (a) to acid treatment at pH of 2.5 - 4.5 followed by filtration to obtain a protein concentrate; and
(c) subjecting the protein concentrate obtained in step (b) to hydrolysis to obtain a fertilizer product.

A prior application from applicant of ES2088826 discloses a method to obtain putrescine and cadaverine diamines through fermentation of treated waste or byproducts of difficult ecological elimination and their subsequent use as additive to manures, and to the corresponding manure. However, this application was aimed to using the waste from the pharmaceutical industry or the biotechnology industry. It is recognized that without expensive treatments such waste coming from microbial cultures and cell cultures which is very rich in proteins, can be harmful to the environment.

WO01/07380A1 discloses soil conditioner, fertilizer and fungicide compositions that utilizes by-products from brewing processes, and especially made from malt extract or spent grain liquor.

However, there is a lack for economically viable approaches using diluted wastes from the processing of beer production. A suitable method for the integral use of waste with very low protein concentration is the fermentation thereof. The present application is focused on the fermentation of these beer waters and their conversion into useful products such as fortifiers and fertilizers for crops and plants. The solution seems to be the fermentation of these waters and their conversion into useful products such as fortifiers and fertilizers for crops and plants. Although there are some references to the use of waste yeast, i.e., the sludge coming from the fermentation of beers and other products, those are nevertheless focused on the fermentation of natural products with high protein content. On the other hand, there are no projects dedicated to the direct fermentation of these waste waters from the production of beers that have very low protein concentrations.

In fact, it can neither be found references dedicated to the obtaining of triamine spermidine and tetramine spermine that, if present, they could provide a significant enhancement in the fortifier and fertilizing properties of the fermenting products, enhancement due to an eventual synergism resulting from the joint presence of the different polyamines.

### OBJECT OF THE INVENTION

A first object of the invention is to obtain an improved fortifier from the direct fermentation of the very low protein concentration wastewater from the beer production. This improved fortifier is a biological product that can be used in agricultural treatments aimed to improve growth, flowering and crop yields with application in floriculture as well as in horticulture, aromatic plants, ornamental plants and trees, and fruit trees.

A second object of the invention is to obtain an improved fortifier composed of triamine spermidine and tetramine spermine thanks to which the fortifier action could be substantially superior due to the synergism resulting from the joint presence of said polyamines.

A third object of the invention is to obtain an improved fortifier that does not represent any danger to the environment. A fortifier that neither saturates nor overloads the subsoil and that is compatible with products of organic nature. This would involve the additional benefit of reducing the environmental impact of waste waters from the beer production by transforming them into beneficial product rather than dumping them directly to the environment.

### DESCRIPTION OF THE INVENTION

An improved fortifier is obtained from wastewater with low protein content from brewer yeast. A valuable product is obtained for its use in various crops such as ornamental plants, aromatic plants, vegetable crops, lawns and trees. By this way, the negative environmental impact of wastewater such as that of the beer industry is being reduced.

The process has the result of in a product with significant content of polyamines, in particular putrescine diamines and cadaverine, triamine spermine and tetramine spermidine. To obtain the polyamines, these amino acids are essential: Arginine (ARG), Lysine (LYS), Ornithine (ORN) and Methionine (MET).

The reactions for the transformation of the aforementioned amino acids into polyamines, are carried out by a single incubation with natural microbes which are present in the environment, such as *Enterobacter Aerogenes, Enterobacter Gergoviae, Hafnia Alvei, Serratia Marcescens, Kluyvera Ascorbata and Obesumbacterium Proteus.* After essays of different reaction modes, It was determined that once the incubation begins and obtained the polyamines putrescine and cadaverine, it is imperative to add to the obtained mixture, the amino acid methionine (MET) and the cation magnesium (Mg ++).

It has been discovered that the presence of these two diamines putrescine and cadaverine activate the synthesis of new polyamines such as spermine and spermidine, which are polyamides that regulate growth, flowering and cell elongation in the kingdom of plants. The synergistic effect of the joint action of putrescine and cadaverine, mentioned by the applicant Agustí Salavert in the previous patent ES2088826 of 1995, becomes significantly enhanced upon the addition of methionine and magnesium (Mg++) caused by the presence of spermine and spermidine. The present invention allows to obtain a product with excellent properties in joint synergistic action of the four polyamines.

The low concentration of NPK, in total lower than 3%, the organic origin of the product and the natural process of later fermentation, offers its usage in ecological crops. It is necessary the presence of a certain concentration of proteins to maintain the stability of the aforementioned polyamines in solution although that is significantly low. This effect is boasted with the formation of protein complexes and chelators with the Ethylenediamine (EDTA) being present.

The Improved fortifier is obtained by means of a single incubation in brewer water. The by-product obtained from beer fermentation and an amino acid product are used as raw material. The aqueous solution of yeast, malt, amino acids and waste organic extracts obtained during the manufacturing process thereof are mixed.

The following steps comprise the obtaining:

### Receiving the Product:

The product from beer fermentation is received, dosed directly in 1,000 liter barrels. Once the barrels are received, they are left at rest at room temperature, for a minimum of 48-72 hours in order to favour the sedimentation of the non-soluble compounds that arrive from the source.

### Filtering:

Subsequently, filtration is carried out to eliminate most of the precipitate in suspension. For this purpose, a filtration device with a pore size filter of 80 µm is used.

### Magnetic treatment of the liquid:

The previously obtained filtrate is subjected to magnetic treatment in a kit equipped with quartz crystals inlaid with gold. This treatment acts on the liquid, homogenizing the solution and favouring fermentation.

### Preparing the fermentation:

Control and initial pH adjustment at 5.9 to 9.0 with 0.1 to 20 g/l phosphate buffer is performed. 10-20 g/l glucose is added and subsequently a microbe suspension is added.

### Adding amino acids:

An amino acid solution is added to the liquid in order to regulate the concentration of the free amino acids mixture. These amino acids should include Lysine, Methionine, Ornithine, Arginine, Glutamine, Homoarginine and Citrulline in their composition, each in concentrations above 0.1%.

### Other factors:

A protein concentration of 0.5% - 1.0% and EDTA of 0.02% - 0.2% must be maintained, both expressed as dry material.

### Fermentation:

Once the mixture is homogenized, the 1000 liter barrels are placed in the room at a controlled temperature of 15 and 40ºC. The mixture remains in these conditions for 2 to 60 days. During this period an accelerated natural fermentation process of the beer-derived waste components takes place.

### Fermentation and pH controls:

The monitoring of the process is carried out by the progressive reduction of pH. The end of the fermentation period is set in a pH of 5.0- 6.0. This ensures the correct maturation state of the yeast and the presence of the amino acids.

### Final filtering:

At the end of the fermentation process, a new filtering with another pore size of 80 µm is carried out to eliminate the impurities resulting from fermentation and to stabilize the final product.

### Dosage and Bottling:

Lastly it is dosed, labeled and packaged for sale.

In summary, the method comprises the following operations:
a) Filtering with an 80 µm filter.
b) Magnetic treatment of the liquid.
c) Additions to the liquid for fermentation:
   0.1 - 20 g/l phosphate for an initial pH adjustment of 6.5 - 8.0;
   addition of 10-20 g/l glucose, and
   microbe suspension.
d) Ensuring that the content in the medium is higher than 0.1% (in dry material) of each of the key free amino acids in the incubation process, *Ornithine, Methionine, Arginine, Lysine, Glutamine, Homoarginine and Citrulline,* in addition to the presence of magnesium as Mg⁺² cation.
e) Ensuring very low concentrations of nitrogen, phosphate and potassium that together should not exceed 3% in total of the mixture.
f) Protein concentration should range from 0.5% to 1.0% in dry material to facilitate the formation of protein complexes and chelators.
g) Performing a single fermentation with glucose as a single environmental substrate, and maintaining the temperature in the range of 15 - 40°C, making a continuous smooth movement of the suspension.
h) Extending the incubation preferably between 24 hours to 30 days according to the degree of concentration of the desired final components.
i) Subjecting the suspension to a second filtration by 80 µm.
j) Performing a second pH control adjusted to 5.0 - 6.0.

### BRIEF DESCRIPTION OF FIGURES

Figures 1a and 1b display examples of conventional production cuttings, both with the fortifier addition, the cultures arranged in parallel for 5 weeks.
Figure 2a displays treated cuttings with the fortifier addition in the front tray and in Figure 2b in the right tray.
Figure 3a displays the cuttings groups treated with the fortifier addition, while Figure 3b displays the untreated.
Figure 4 displays the geranium cuttings treated with the fortifier addition.
Figure 5 displays the differences in root growth when applying fortifier in growing Dimorphotheca plants.
Figure 6 displays the general appearance of Dimorphotheca plants treated before flowering.
Figure 7 displays the fortifier action in growing Dimorphotheca plants.
Figure 8 displays the differences in vigor and flowering of treated Dimorphotheca plants.

### EMBODIMENTS OF THE INVENTION

### Obtaining the fortifier

900 liters of liquid are placed in a container with a capacity of 1000 liters and let to settle for 48 hours. The liquid is filtered through a filter with a pore size of 80 µm and is passed through a magnetic treatment kit. Then, 50 liters of 10% concentrated amino acids are added for a total concentration of 1% amino acids in the solution. Then, 25 liters of glucose solution of a 0.4 kg/l concentration and 25 liters of a suspension of10⁸ microbes/ml are added. It is fermented in a room at a controlled temperature of 30ºC for 45 days. At the end of fermentation a pH control is performed and it is again passed through a filter with a pore size of 80 µm. The product is defined as finished to be bottled.

The final product of this same fermentation was subject to the following essays with the following results:

### Aromatic plant - Mint

A study carried out in an ecological nursery of aromatic plants with the purpose of determining the final result in the mint cuttings after the fortifier has been applied directly to the mother plants.

Comparison of the growth of cuttings from plants treated with the fortifier addition and plants without the addition. A number of 20 mother plants of this variety were selected, then watered and applied with the conventional fertilizer solution plus a fortifier solution. After 1 month the cuttings protruding therefrom began to be monitored and compared with the nursery conventional mint production.

The cuttings from the plants treated with the fortifier addition exhibited the following characteristics:
- Larger size of the cuttings and faster growth (5 days of nursery were gained).
- Greater quantity and size of the roots.
- More intense color
- Higher survival rate of the cuttings.
- Increase of more 30% in the plant biological mass.

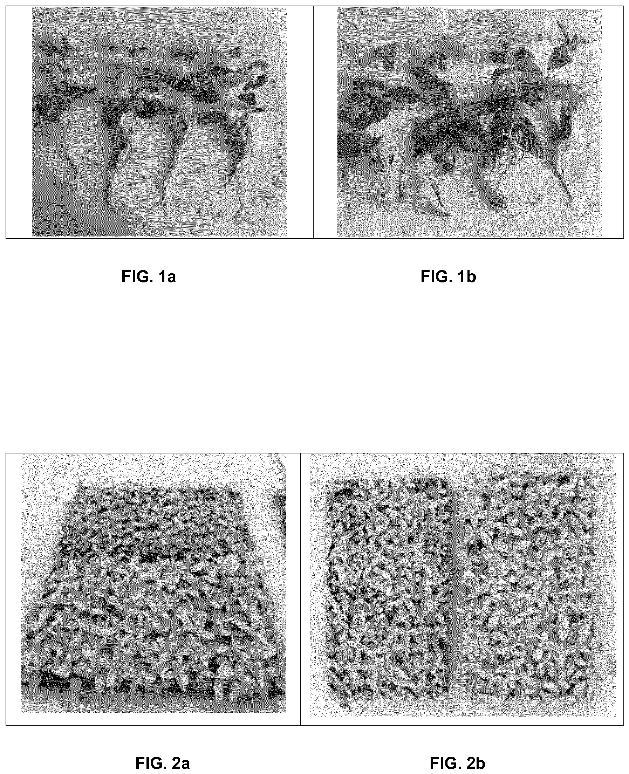

Figure 1a (conventional production) and Figure 1b (with fortifier addition) represent the example of different cuttings that were obtained in parallel culture for a period of 5 weeks. It can be noticed that the cuttings from plants treated with the fortifier addition had larger size and bigger roots in volume and size.

Figures 2 compare the appearance of the cuttings treated with the fortifier addition. The front tray of Figure 2a and the right tray of Figure 2b ( the treated with fortifier) are compared with the respective example of untreated cuttings. The cuttings treated with the fortifier addition exhibited greater vigor and the production and sale of the cuttings was advanced almost a week. There were no losses in the cuttings treated with the fortifier addition, while the nursery conventional production accounted for losses between 3% and 10% depending on the case. Thus, in the treated, a production with no losses was achieved. Growth gets uniform. It can be concluded it was obtained a greater volume and size in the cuttings treated with the fortifier addition.

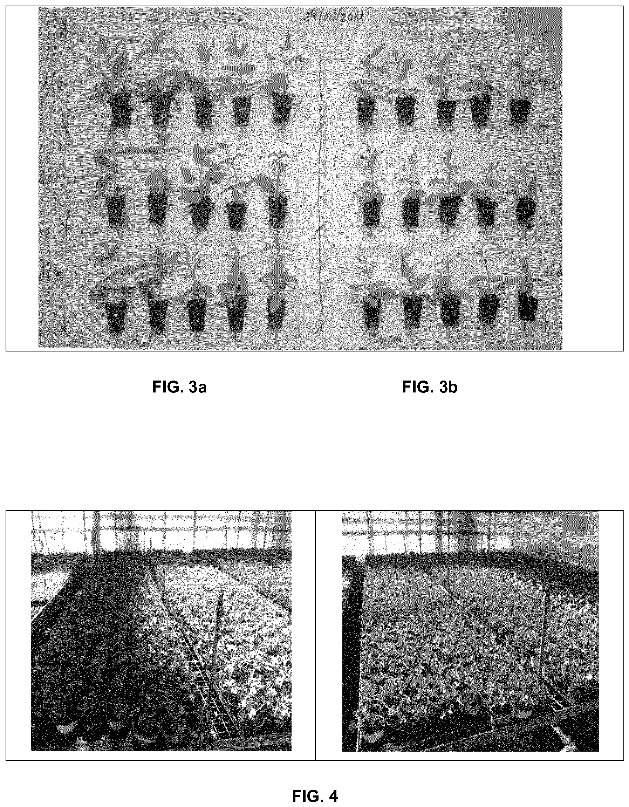

The Figures 3 show the sizes obtained in centimeters achieved for samples treated with the fortifier addition in Figure 3a and without the addition in Figure 3b. The groups of cuttings on the left are those treated with the fortifier addition. As shown the height and vigor are greater. With the same period of growth, the treated cuttings exceeded by 2 and 3 cm the height of the untreated cuttings. The difference in size achieved thanks to the use of the fortifier is very evident.

After conducting the culture, a number of cuttings were collected as the representative sample and the biological mass of the mother plants with the fortifier addition was determined as well as for those without it. The results obtained are shown in the table below.

### Increase in biological mass

| | | |
|---|---|---|
| | | |

| Average weight of fresh plants, g | | Increase, % |
|---|---|---|
| Conventional mother plant cuttings | 9.10 | |
| Mother plant cuttings with fortifier | 14.20 | 36.0 |
| | | |

| Average weight of dry plants, g | | Increase, % |
|---|---|---|
| Conventional mother plant cuttings | 1.40 | |
| Mother plant cuttings with fortifier | 2.20 | 36.0 |

### Test on beans of the Santa Pau variety

The exhibited results are derived from the experimentation and testing of the fortifier in bean plants of the Santa Pau variety. The study was conducted with a sample of 143 plants. All plants were fertilized in the same manner, in this case with a conventional granulated fertilizer mixed with soil. From here, a part of the plants was also watered with the fortifier product, leaving the other part as the control, treated only with the conventional fertilizer.

Tests were carried out with the fortifier addition in different concentrations. The suggested concentration according to the product protocols was 1.0, corresponding to a concentration of 1.0 ppm Polyamine and thereafter the following lower and upper values were defined as: 0.25 - 0.5 - 1.5 - 2.0. The number and weight of the filled pods per plant were counted, as well as the number and weight of the beans extracted from the pods per plant.

The results were the following:
Table 1 shows the weight of beans per plant where an optimal increase of 40-44% compared to the control is obtained for a value dose of 1.0.

**Table 1**

| Weight of beans per plant | | |
|---|---|---|
| Dose | Weight (grams) | Increase with regard to control |
| Control | 8.3 | |
| Treatment dose 0.25 | 8.9 | 7% |
| Treatment dose 0.5 | 10.8 | 30% |
| Treatment dose 1.0 | 11.9 | 44% |
| Treatment dose 2.0 | 11.6 | 40% |

Table 2 shows the average number of beans per plant, where an optimum increase of 33% is obtained compared to the control for a dose value of 1.0.

**Table 2**

| Average number of beans per plant | | |
|---|---|---|
| Dose | No. of beans | Increase with regard to control |
| Control | 34 | |
| Treatment dose 0.25 | 36 | 5 % |
| Treatment dose 0.5 | 41 | 21 % |

| | *follows from Tabla 2* | |
|---|---|---|
| Treatment dose 1.0 | 45 | 33 % |
| Treatment dose 1.5 | 41 | 20 % |
| Treatment dose 2.0 | 41 | 22 % |

Table 3 shows the average weight of the pods per plant where an optimal increase of 44% is obtained compared to the control for a dose value of 1.0.

**Table 3**

| Average weight of pods per plant | | |
|---|---|---|
| Weight (grams) | Weight (grams) | Increase with regard to control |
| Control | 10.7 | |
| Treatment dose 0.25 | 11.5 | 8% |
| Treatment dose 0.5 | 13.4 | 25% |
| Treatment dose 1.0 | 15.4 | 44% |
| Treatment dose 1.5 | 13.8 | 29% |
| Treatment dose 2 | 14.2 | 32% |

Table 4 shows the average number of pods per plant, with the optimum increase of 24% is obtained with respect to the control for a dose value of 1.0.

**Table 4**

| Average number of pods per plant | | |
|---|---|---|
| Dose | No. pods | Increase in control |
| Control | 11 | |
| Treatment dose 0.25 | 12 | 9% |
| Treatment dose 0.5 | 13 | 12% |
| Treatment dose 1.0 | 14 | 24% |
| Treatment dose 1.5 | 13 | 16% |
| Treatment dose 2 | 14 | 22% |

Table 5 shows the average weight of each pod, where an optimum increase of 17% is obtained with respect of the control for a dose value of 1.0.

**Table 5**

| Average weight of each pod | | |
|---|---|---|
| Dose | Weight (grams) | Increase in control |
| Control | 1.01 | |
| Treatment dose 0.25 | 0.99 | -2 % |
| Treatment dose 0.5 | 1.07 | 12% |
| Treatment dose 1 | 1,18 | 17% |
| Treatment dose 1.5 | 1.09 | 8% |
| Treatment dose 2 | 1.07 | 6% |

In general when applying different concentrations of the fortifier, there was a significant increase in both the number and weight of pods per plant, as well as in the number and weight of beans per plant.

### Ornamental plant

The purpose of the test was to observe the differences in growth and flowering of the conventional production of the nursery with the same conventional production plus the addition of a fortifier solution. The study was carried out in an ornamental plant nursery. Currently it is one of the largest producers of ornamental plants in Maresme. Two varieties of cuttings and five varieties of plants were treated.

### Cuttings:

Cuttings from Ville de Paris Geraniums and Carnations were treated. In both cases 600 units of each. They were watered 3 times with the fortifier addition, 1 watering per week for 3 weeks with solution 1/200 vol/vol. In Figure 4 two photos of the treated cuttings with the fortifier addition are shown. In both varieties the result was the same, the growth of the cuttings was achieved in advanced. They left the nursery a week earlier compared to the conventional one.

### Plants:

The 5 weeks old total of 380 plants of different varieties were treated with the fortifier and subjected to 6 applications. The following varieties were tested:
- Ville de Paris Geranium: 80 unit.
- Double flower geranium: 25 units.
- Carnations: 70 units.
- Dimorphotheca: 145 units.
- Whorled plectranthus: 30 units.
- Zonal: 30 units.

The applications were made at 1/200 dilution in the following order:

| **1^{st} month** | | | | | | | |
|---|---|---|---|---|---|---|---|
| | **M** | **T** | **W** | **T** | **F** | **S** | **S** |
| **Week 1** | **1** | | | | | | |
| **Week 2** | **2** | | | | | | |
| **Week 3** | | | | | | | |
| **Week 4** | | | | | | | |

| **2^{nd} month** | | | | | | | |
|---|---|---|---|---|---|---|---|
| | **M** | **T** | **W** | **T** | **F** | **S** | **S** |
| **Week 1** | **3** | | | | | | |
| **Week 2** | **4** | | | | | | |
| **Week 3** | | | | | | | |
| **Week 4** | | | | | | | |

| **3^{rd} month** | | | | | | | |
|---|---|---|---|---|---|---|---|
| | **M** | **T** | **W** | **T** | **F** | **S** | **S** |
| **Week 1** | **5** | | | | | | |
| **Week 2** | **6** | | | | | | |
| **Week 3** | | | | | | | |
| **Week 4** | | | | | | | |

During test, growth and flowering were evaluated. The change was already evident starting from the third and the fourth application. In general, except for the whorled plectranthus, all displayed greater vigor. These exhibited increased vigor and flowering, generally an increase in size to 10 - 20% depending on the case. Likewise, they exhibited more number of roots and flowers. On the other hand, the whorled plectranthus exhibited an increase in the number of branches.

### Geranium test.

Figure 4 shows the geranium cuttings treated with the fortifier addition, those that overtook conventional nursery production between 5 and 7 days. Its growth was greater and faster.

### Dimorphotheca test.

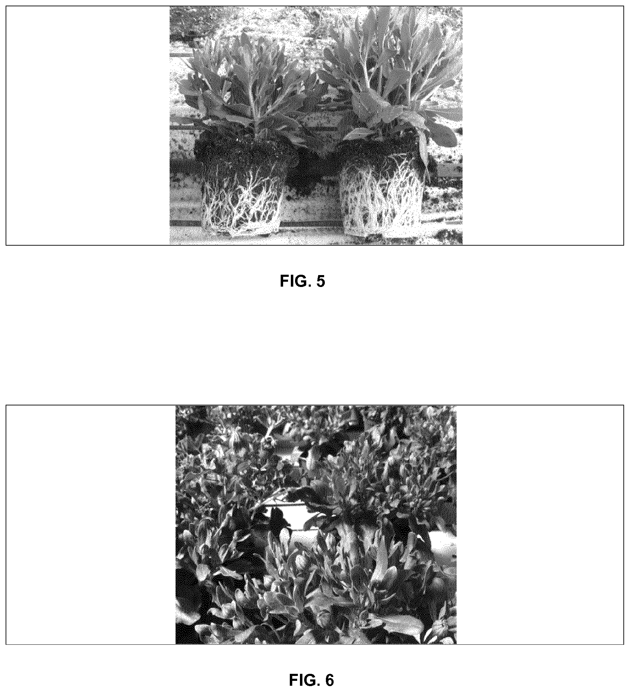

Figure 5 shows the results obtained in the treated plants with the fortifier addition, which exhibited a higher quantity of roots. The plant on the right is the plant treated with the fortifier and as it can be appreciated the roots are more numerous and go up higher into the pot. Figure 6 shows that the treated plants exhibit greater vigor and number of leaves per sproud and buds about to flower.

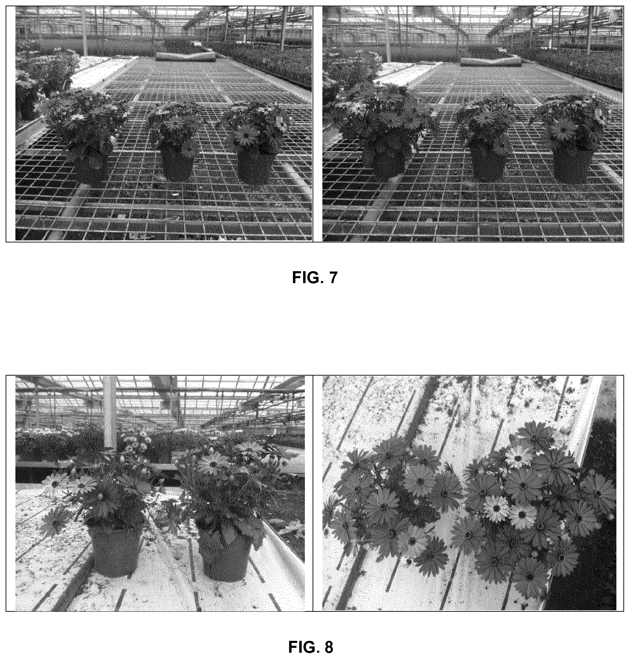

Figure 7 shows the action of the fortifier in growing Dimorphotheca plants. On the left in both photos the pot corresponding to the treated plants with fortifier addition is shown. The application of the product resulted in a larger size of these of 10 - 20%, with a higher growth rate and vigor. Figure 8 on the right shows the photos of both pots corresponding to plants treated with the fortifier addition. The plants of treated Dimorphothecas display greater vigor and flowering, having 10 - 30% more flowers depending on the analyzed sample.

### SUMMARY

Thus, the present invention accomplished direct fermentation of beer production waste water with very low protein concentration. The invention takes advantage of this waste by eliminating the dumping with the corresponding environmental impact reduction.

It should be added that the invention has accomplished the object of the invention relative to obtaining triamine *spermidine* and tetramine *spermine* within the fortifier composition; thus obtaining an improved fortifier, and the evidence of the effective action thereof in various crops.

Once the invention has been sufficiently described, as well as the preferred embodiment as way of example not intended to be limitative, it should be added that it is possible to make changes to their constitution and to the materials employed without departing from the scope thereof, defined in the following claims.

## Claims

1. Obtaining an improved fortifier from beer yeast wastewater of very low protein concentration **characterized in that** it is carried out by a single incubation in brewer water, obtaining triamine spermidine and tetramine spermine, comprising the following steps:
a) Filtering by a pore filter of 80 µm.
b) Magnetic treatment of the liquid.
c) Addition of a pH buffer containing 0.1 - 20 g/l phosphate and a pH of 5.0 - 9.0.
d) Addition of 10 - 20 g/l glucose.
e) Addition of amino acids and magnesium salt maintaining a content greater than 0.1% of free amino acids during incubation and a content of magnesium cation (Mg⁺²) of at least 0.1 %, both expressed as dry material, the amino acids comprising Arginine, Lysine, Ornithine and Methionine.
f) Ensuring very low concentrations of nitrogen, phosphate and potassium that must not exceed 3% as a whole.
g) Ensuring a concentration of protein 0.5% - 1.0%, and EDTA 0.02% - 0.2%, both expressed as dry material.
h) Addition of *Enterobacter Aerogenes, Enterobacter Gergoviae, Hafnia Alvei, Serratia Marcescens, Kluyvera Ascorbata or Obesumbacterium Proteus.*
i) Performing a single fermentation at temperatures between 15ºC and 40ºC, making a smooth, continuous motion of the suspension.
j) Extending incubation for 24 hours to 30 days, depending on the desired concentration degree of the final components.
k) Filtering by a pore filter of 80 µm.
l) Final adjustment of pH 5.0 - 6.0.

2. Obtaining an improved fortifier according to claim No. 1 **characterized in that** prior to the fermentation of the liquid a magnetic treatment is applied in a device equipped with quartz crystals with gold inlays at temperature between 15°and 40°C and a passage flow of the liquid between 10 and 100 l/min.

3. Obtaining an improved fortifier according to claim No. 1 **characterized in that** after the magnetic treatment and before fermentation a mixture of the amino acids *Ornithine, Methionine, Arginine, Lysine, Glutamine, Homoarginine and Citrulline* is added, wherein the Initial total concentration of amino acids must be greater than 0.1%, expressed as dry material.

4. Obtaining an improved fortifier according to Claim No. 1 **characterized in that** after the fermentation has started and the diamines putrescine and cadaverine been obtained, triamine spermidine and tetramine spermine are obtained by adding to the mixture the amino acid methionine in conditions of magnesium cation concentration of at least 0.1% and an initial pH 5.0 - 9.0 of the mixture

5. An improved fortifier from beer yeast wastewater of very low protein concentration **characterized in that** it comprises triamine spermidine and tetramine spermine, and **in that** it is obtained with the following steps:
a) Filtering with an 80 µm pore filter
b) Magnetic treatment of the liquid
c) Addition of a pH buffer containing 0.1 - 20 g/l phosphate and a pH 5.0 - 9.0.
d) Addition of 10 - 20 g/l glucose.
e) Addition of amino acids and magnesium salt to maintain during the incubation a content greater than 0.1% of free amino acids and a magnesium cation content (Mg⁺²) of at least 0.1%, both expressed as dry material, the amino acids comprising Arginine, Lysine, Ornithine and Methionine.
f) Ensuring very low concentrations of nitrogen, phosphate and potassium, which as a whole should not exceed 3.0%, expressed as dry material.
g) Ensuring a protein concentration of 0.5% - 1.0%, and EDTA concentration of 0.02% - 0.2%, both expressed as dry material.
h) Addition of *Enterobacter Aerogenes, Enterobacter Gergoviae, Hafnia Alvei, Serratia Marcescens, Kluyvera Ascorbata or Obesumbacterium Proteus.*
i) Performing a single fermentation at temperatures between 15ºC and 40ºC, making a smooth and continuous movement of the suspension.
j) Extending the incubation for 24 hours to 30 days, depending on the desired concentration degree of the final components.
k) Filtered by a pore filter of 80 µm.
l) Final pH adjustment 5.0 - 6.0.

6. Use of an improved fortifier according to claim 5 to regulate growth, flowering and cellular elongation in horticulture, aromatic plants, trees and ornamental plants, and fruit trees.

## Patentansprüche

1. - Gewinnung eines verbesserten Anreicherungsmittels aus Bierhefeabwässern mit sehr geringer Proteinkonzentration, **dadurch gekennzeichnet, dass** es durch eine einzige Inkubation in Brauwasser durchgeführt wird, wobei Triamin-Spermidin und Tetramin-Spermin erhalten werden, umfassend die folgenden Schritte:
a) Filtrierung durch einen Porenfilter von 80 µm.
b) Magnetische Behandlung der Flüssigkeit.
c) Zugabe eines pH-Puffers mit 0,1 - 20 g/l Phosphat und einem pH-Wert von 5,0 - 9,0.
d) Zugabe von 10 - 20 g/l Glukose.
e) Zugabe von Aminosäuren und Magnesiumsalz zur Aufrechterhaltung eines Gehalts von mehr als 0,1 % an freien Aminosäuren während der Inkubation und eines Gehalts an Magnesiumkationen (Mg⁺² ) von mindestens 0,1 %, beides ausgedrückt als Trockenmaterial, wobei die Aminosäuren Arginin, Lysin, Ornithin und Methionin umfassen.
f) Sicherstellung sehr niedriger Konzentrationen von Stickstoff, Phosphat und Kalium, die insgesamt 3 % nicht überschreiten dürfen.
g) Sicherstellung einer Proteinkonzentration von 0,5 % - 1,0 % und einer EDTA-Konzentration von 0,02 % - 0,2 %, beide ausgedrückt als Trockenmaterial.
h) Zugabe von *Enterobacter Aerogenes, Enterobacter Gergoviae, Hafnia Alvei, Serratia Marcescens, Kluyvera Ascorbata oder Obesumbacterium Proteus.*
i) Durchführung einer einzigen Gärung bei Temperaturen zwischen 15°C und 40°C, wobei die Suspension gleichmäßig und kontinuierlich bewegt wird.
j) Verlängerung der Inkubation um 24 Stunden bis 30 Tage, je nach dem gewünschten Konzentrationsgrad der Endkomponenten.
k) Filtrierung durch einen Porenfilter von 80 µm.
l) Endgültige Einstellung des pH-Wertes auf 5,0 - 6,0.

2. - Gewinnung eines verbesserten Anreicherungsmittels nach Anspruch Nr. 1, **dadurch gekennzeichnet, dass** vor der Fermentation der Flüssigkeit eine magnetische Behandlung in einer mit Quarzkristallen mit Goldeinlagen ausgestatteten Vorrichtung bei einer Temperatur zwischen 15° und 40°C und einem Durchfluss der Flüssigkeit zwischen 10 und 100 l/min durchgeführt wird.

3. Gewinnung eines verbesserten Anreicherungsmittels nach Anspruch Nr. 1, **dadurch gekennzeichnet, dass** nach der magnetischen Behandlung und vor der Fermentation eine Mischung der Aminosäuren *Ornithin, Methionin, Arginin, Lysin, Glutamin, Homoarginin und Citrullin* zugesetzt wird, wobei die anfängliche Gesamtkonzentration der Aminosäuren größer als 0,1 %, ausgedrückt als Trockenmaterial, sein muss.

4. Gewinnung eines verbesserten Anreicherungsmittels nach Anspruch Nr. 1, **dadurch gekennzeichnet, dass** nach dem Beginn der Fermentation und der Gewinnung der Diamine Putrescin und Cadaverin Triamin-spermidin und Tetramin-spermin durch Zugabe der Aminosäure Methionin zu der Mischung bei einer Magnesiumkationenkonzentration von mindestens 0,1 % und einem anfänglichen pH-Wert der Mischung von 5,0 bis 9,0 erhalten werden.

5. Ein verbesserter Anreicherungsmittel aus Bierhefeabwasser mit sehr geringer Proteinkonzentration, **dadurch gekennzeichnet, dass** es Triamin-Spermidin und Tetramin-Spermin enthält und dass es durch die folgenden Schritte erhalten wird:
a) Filtrierung durch einen Porenfilter von 80 µm.
b) Magnetische Behandlung der Flüssigkeit.
c) Zugabe eines pH-Puffers mit 0,1 - 20 g/l Phosphat und einem pH-Wert von 5,0 - 9,0.
d) Zugabe von 10 - 20 g/l Glukose.
e) Zugabe von Aminosäuren und Magnesiumsalz zur Aufrechterhaltung eines Gehalts von mehr als 0,1 % an freien Aminosäuren während der Inkubation und eines Gehalts an Magnesiumkationen (Mg⁺² ) von mindestens 0,1 %, beides ausgedrückt als Trockenmaterial, wobei die Aminosäuren Arginin, Lysin, Ornithin und Methionin umfassen.
f) Sicherstellung sehr niedriger Konzentrationen von Stickstoff, Phosphat und Kalium, die insgesamt 3 % nicht überschreiten dürfen.
g) Sicherstellung einer Proteinkonzentration von 0,5 % - 1,0 % und einer EDTA-Konzentration von 0,02 % - 0,2 %, beide ausgedrückt als Trockenmaterial.
h) Zugabe von *Enterobacter Aerogenes, Enterobacter Gergoviae, Hafnia Alvei, Serratia Marcescens, Kluyvera Ascorbata oder Obesumbacterium Proteus.*
i) Durchführung einer einzigen Gärung bei Temperaturen zwischen 15°C und 40°C, wobei die Suspension gleichmäßig und kontinuierlich bewegt wird.
j) Verlängerung der Inkubation um 24 Stunden bis 30 Tage, je nach dem gewünschten Konzentrationsgrad der Endkomponenten.
k) Filtrierung durch einen Porenfilter von 80 µm.
l) Endgültige Einstellung des pH-Wertes auf 5,0 - 6,0.

6. Verwendung eines verbesserten Stärkungsmittels nach Anspruch 5 zur Regulierung des Wachstums, der Blüte und der Zelldehnung im Gartenbau, bei aromatischen Pflanzen, Bäumen und Zierpflanzen sowie bei Obstbäumen.

## Revendications

1. Obtention d'un fortifiant amélioré à partir d'eaux usées de levure de bière à très faible concentration en protéines, **caractérisé en ce qu'**il est réalisé par une seule incubation dans de l'eau de brasserie, obtenant de la triamine spermidine et de la tétramine spermidine, comprenant les étapes suivantes :
a) Filtration par un filtre à pores de 80 µm.
b) Traitement magnétique du liquide.
c) Ajout d'un tampon pH contenant 0,1 à 20 g/l de phosphate et un pH de 5,0 - 9,0.
d) Ajout de 10 à 20 g/l de glucose.
e) Ajout d'acides aminés et de sel de magnésium maintenant une teneur supérieure à 0,1 % d'acides aminés libres pendant l'incubation et une teneur en cation magnésium (Mg⁺² ) d'au moins 0,1 %, toutes deux exprimées en matière sèche, les acides aminés comprenant l'arginine, la lysine, l'ornithine et la méthionine.
f) Assurer de très faibles concentrations d'azote, de phosphate et de potassium qui ne doivent pas dépasser 3 % dans l'ensemble.
g) Assurer une concentration de protéines de 0,5 % à 1,0 % et d'EDTA de 0,02 % à 0,2 %, tous deux exprimés en matière sèche.
h) Ajout *d'Enterobacter Aerogenes, Enterobacter Gergoviae, Hafnia Alvei, Serratia Marcescens, Kluyvera Ascorbata ou Obesumbacterium Proteus.*
i) Réalisation d'une fermentation unique à des températures comprises entre 15°C et 40°C, en effectuant un mouvement doux et continu de la suspension.
j) Prolonger l'incubation de 24 heures à 30 jours, en fonction du degré de concentration souhaité des composants finaux.
k) Filtration par un filtre à pores de 80 µm.
l) Ajustement final du pH de 5,0 à 6,0.

2. Obtention d'un fortifiant amélioré selon la revendication n° 1 **caractérisé en ce qu'**avant la fermentation du liquide, un traitement magnétique est appliqué dans un dispositif équipé de cristaux de quartz avec des incrustations d'or à une température comprise entre 15° et 40°C et un débit de passage du liquide compris entre 10 et 100 l/min.

3. Obtention d'un fortifiant amélioré selon la revendication n° 1 **caractérisé en ce qu'**après le traitement magnétique et avant la fermentation, un mélange d'acides aminés *Ornithine, Méthionine, Arginine, Lysine, Glutamine, Homoarginine et Citrulline* est ajouté, la concentration totale initiale d'acides aminés devant être supérieure à 0,1 %, exprimée en matière sèche.

4. Obtention d'un fortifiant amélioré selon la revendication n° 1 **caractérisé en ce qu'**après le démarrage de la fermentation et l'obtention des diamines putrescine et cadavérine, on obtient la triamine spermidine et la tétramine spermine en ajoutant au mélange l'acide aminé méthionine dans des conditions de concentration de cation magnésium d'au moins 0,1 % et de pH initial du mélange compris entre 5,0 et 9,0.

5. Un fortifiant amélioré à partir d'eaux usées de levure de bière à très faible concentration en protéines, **caractérisé en ce qu'**il comprend de la triamine spermidine et de la tétramine spermine, et **en ce qu'**il est obtenu par les étapes suivantes :
a) Filtration avec un filtre à pores de 80 µm.
b) Traitement magnétique du liquide.
c) Ajout d'un tampon pH contenant 0,1 á 20 g/l de phosphate et un pH de 5,0 à 9,0.
d) Ajout de 10 à 20 g/l de glucose.
e) Ajout d'acides aminés et de sel de magnésium pour maintenir pendant l'incubation une teneur supérieure à 0,1 % d'acides aminés libres et une teneur en cation magnésium (Mg⁺² ) d'au moins 0,1 %, toutes deux exprimées en matière sèche, les acides aminés comprenant l'arginine, la lysine, l'ornithine et la méthionine.
f) Assurer de très faibles concentrations d'azote, de phosphate et de potassium, qui, dans l'ensemble, ne doivent pas dépasser 3,0 %, exprimées en matière sèche.
g) Assurer une concentration en protéines de 0,5 % à 1,0 % et une concentration en EDTA de 0,02 % à 0,2 %, toutes deux exprimées en matière sèche.
h) Ajout *d'Enterobacter Aerogenes, Enterobacter Gergoviae, Hafnia Alvei, Serratia Marcescens, Kluyvera Ascorbata ou Obesumbacterium Proteus.*
i) Réalisation d'une fermentation unique à des températures comprises entre 15°C et 40°C, en effectuant un mouvement doux et continu de la suspension.
j) Prolonger l'incubation de 24 heures à 30 jours, en fonction du degré de concentration souhaité des composants finaux.
k) Filtré par un filtre à pores de 80 µm.
l) Ajustement final du pH de 5,0 à 6,0.

6. Utilisation d'un fortifiant amélioré selon la revendication 5 pour réguler la croissance, la floraison et l'élongation cellulaire dans l'horticulture, les plantes aromatiques, les arbres et les plantes ornementales, et les arbres fruitiers.
